# EUROPÄISCHE PATENTANMELDUNG

(11) **EP 3 093 685 A1**
(43) Veröffentlichungstag der Anmeldung: **16.11.2016**
(21) Anmeldenummer: 15167323.3
(22) Anmeldetag: 12.05.2015
(51) Int. Cl.: G01S 5/16, G01S 17/02

(54) **VERFAHREN ZUM EINMESSEN EINES PUNKTES IN EINEM DREIDIMENSIONALEN OBJEKT**

(71) Anmelder: Siemens AG Österreich, 1210 Wien (AT)
(72) Erfinder: Birchbauer, Josef Alois, 8054 Seiersberg (AT); Hatzl, Jürgen, 7423 Grafenschachen (AT); Hödlmoser, Michael, 1180 Wien (AT); Wakolbinger, Stefan, 8010 Graz (AT)
(74) Vertreter: Maier, Daniel Oliver

(57) **Zusammenfassung**

Die Erfindung betrifft ein Verfahren zum Einmessen eines Punktes (2) in einem dreidimensionalen Objekt, insbesondere einem Gebäude, mittels eines dreidimensionalen Modells der Raumgeometrie des dreidimensionalen Objektes, wobei folgende Verfahrensschritte durchgeführt werden: Ausrichten eines Laserentfernungsmessers (5) auf den einzumessenden Punkt (2), um die Entfernung zum Punkt (2) zu messen, Aufnehmen eines Bildes mittels einer Kamera (18), deren Aufnahmeachse in einer vorgegebenen Relativgeometrie zur Strahlenachse (23) des Laserentfernungsmessers (5) ausgerichtet ist, Lokalisierung der Kamera (18) im dreidimensionalen Objekt mittels einer Auswerteeinrichtung, welche die Daten des aufgenommenen Bildes mit den Daten des dreidimensionalen Modells abgleicht und Ermitteln der Lage des einzumessenden Punktes (2) anhand der gemessenen Entfernung, der lokalisierten Position der Kamera (18) und der Relativgeometrie zwischen Aufnahmeachse und Strahlenachse (23).

## Beschreibung

Die Erfindung betrifft ein Verfahren zum Einmessen eines Punktes in einem dreidimensionalen Objekt, insbesondere einem Gebäude, mittels eines dreidimensionalen Modells der Raumgeometrie des dreidimensionalen Objektes. Zudem betrifft die Erfindung ein Messgerät zur Durchführung des Verfahrens und ein entsprechendes Messsystem.

In Zeiten zunehmender Digitalisierung steigen die Anforderungen an die Nachbildung dreidimensionaler Objekte in Form digitaler Modelle. Das trifft insbesondere für Plandaten von Gebäuden zu. Dabei stimmt das reale Gebäude selten mit dem entsprechenden digitalen Modell überein. Mangelnde Genauigkeit oder gewollte Änderungen bei der Umsetzung oder bei Umbauarbeiten sind die häufigsten Ursachen für Abweichungen.

Sobald ein digitales Modell zu sehr von der Realität abweicht, kann es nur mehr bedingt zur Planung bzw. Nachbildung nachträglicher Installationen dienen. Zudem können neue Services (z.B. Lokalisierungsdienste) ein präzises Einmessen einer Objektgeometrie bzw. eine Bezugspunktbestimmung erforderlich machen. Der vorliegende Datenbestand ist für diese Zwecke oftmals nicht ausreichend genau.

Nach dem Stand der Technik erfolgt ein Einmessen eines Punktes in einem dreidimensionalen Objekt mittels des Triangulationsverfahrens. Dieses Verfahren ist jedoch teuer, zeitaufwändig und nur durch speziell geschultes Personal durchführbar.

Im einfachsten Fall dienen zweidimensionale Bildaufnahmen des dreidimensionalen Objekts als Ausgangsmaterial. Aus unterschiedlichen Blickwinkeln aufgenommene Bilder enthalten günstigerweise mehrere extrahierbare Merkmale (sogenannte "Features" oder "Points of Interest") des Objekts. Weisen unterschiedliche Bilder korrespondierende Merkmale auf, lässt sich daraus mittels eines Stereo-Verfahrens 3D-Information ableiten. Basierend auf diesen Daten ist ein Triangulationsverfahren durchführbar.

Sobald das dreidimensionale Objekt zu wenige extrahierbare Merkmale aufweist, stehen für das Triangulationsverfahren keine hinreichenden Daten zur Verfügung. Das ist beispielsweise bei homogenen, informationsarmen Flächen der Fall.

Der Erfindung liegt die Aufgabe zugrunde, für ein Verfahren der eingangs genannten Art eine Verbesserung gegenüber dem Stand der Technik anzugeben. Zudem soll ein entsprechendes Messgerät bzw. ein Messsystem beschrieben werden.

Erfindungsgemäß werden diese Aufgaben gelöst durch ein Verfahren gemäß Anspruch 1, ein Messgerät gemäß Anspruch 5 und ein Messsystem gemäß Anspruch 14. Vorteilhafte Ausgestaltungen und Weiterbildungen der Erfindung sind Gegenstand der abhängigen Ansprüche.

Die einzelnen Verfahrensschritte sind ein Ausrichten eines Laserentfernungsmessers auf den einzumessenden Punkt, um die Entfernung zum Punkt zu messen, ein Aufnehmen eines Bildes mittels einer Kamera, deren Aufnahmeachse in einer vorgegebenen Relativgeometrie zur Strahlenachse des Laserentfernungsmessers ausgerichtet ist, eine Lokalisierung der Kamera im dreidimensionalen Objekt mittels einer Auswerteeinrichtung, welche die Daten des aufgenommenen Bildes mit den Daten des dreidimensionalen Modells abgleicht und ein Ermitteln der Lage des einzumessenden Punktes anhand der gemessenen Entfernung, der lokalisierten Position der Kamera und der Relativgeometrie zwischen Aufnahmeachse und Strahlenachse. Mit diesem Verfahren wird der einzumessende Punkt in seiner Lage innerhalb des dreidimensionalen Modells festgelegt. Das geschieht in einfacher Weise und mit einem präzisen Ergebnis, wobei Abweichungen des Modells von der Realität berücksichtigt werden.

In einer vorteilhaften Ausprägung werden die Daten des dreidimensionalen Modells in einer zentralen Datenbank gespeichert. Vorgenommene Änderungen sind dann sofort für alle Anwendungsfälle gültig, sodass kein inkonsistenter Datenbestand entstehen kann.

Dabei werden gemäß einer Weiterbildung das aufgenommene Bild und die gemessene Entfernung zum einzumessenden Punkt an einen Server übertragen, wobei der Server die Daten des aufgenommenen Bildes mit den Daten des dreidimensionalen Modells abgleicht. Somit muss am Messort selbst keine eigene Auswerteeinrichtung vorhanden sein, weil der Server als Auswerteeinrichtung dient.

Günstigerweise ist vorgesehen, dass der Server ein Ergebnis der Lokalisierung zurücksendet. Als Ergebnis können entweder die Messwerte selbst oder lediglich eine Erfolgsmeldung gelten.

In seiner einfachsten Ausführung umfasst ein erfindungsgemäßes Messgerät zur Durchführung der obigen Verfahren die Kamera und den Laserentfernungsmesser, welche vorzugsweise untereinander in einer fixen Anordnung verbunden sind. Die Ausrichtung der Kamera in Bezug auf den Laserentfernungsmesser ist jedenfalls kalibriert, sodass während einer Messung keine Verschiebungen möglich sind.

Dabei ist es vorteilhaft, wenn das Messgerät zumindest eine weitere Kamera zum Aufnehmen eines weiteren Bildes des dreidimensionalen Objektes umfasst. Damit ist die Lokalisierung im dreidimensionalen Objekt auch bei wenigen Objektmerkmalen verlässlich durchführbar, weil ein größerer Ausschnitt der dreidimensionalen Umgebung erfasst und ausgewertet wird.

Günstigerweise sind die Kameras in einem Multi-Kamerakopf integriert, sodass eine kompakte Einheit mit einer Schnittstelle zu den übrigen Gerätekomponenten gegeben ist.

Für ein einfaches Handling ist eine Ausbildung des Messgeräts als Handgerät vorgesehen.

Sinnvollerweise umfasst das Messgerät ein einfach zu betätigendes Auslöseelement zum Starten des Messvorgangs.

Ein weiterer Vorteil ist gegeben, wenn das Messgerät ein Ausgabeelement zur Meldung eines durchgeführten Messvorgangs umfasst. Auf diese Weise ist sichergestellt, dass jede Messung vollständig abgeschlossen wird.

Um Entfernungsmessungen mittels des Laserentfernungsmessers bildlich zu dokumentieren ist es vorteilhaft, wenn das Messgerät eine Zusatzkamera umfasst, deren Aufnahmeachse in Richtung des Lasermessstrahls ausgerichtet ist. Anhand dieser zusätzlichen Bilddaten ist auch im Nachhinein feststellbar, welcher Punkt eingemessen wurde.

Alternativ dazu ist bei einem Messgerät mit Multi-Kamerakopf die Aufnahmeachse einer Kamera des Multi-Kamerakopfes in Richtung des Lasermessstrahls ausgerichtet.

In einer günstigen Ausprägung des Messgeräts sind die Lage einer Achse der Kamera oder des Multi-Kamerakopfes und die Lage der Strahlenachse des Laserentfernungsmessers zueinander durch einen vorgegebenen Winkel bestimmt. Mit einem derartigen Messgerät sind insbesondere Punkte an einer Gebäudedecke einfach einmessbar, weil der Laser gegen die strukturarme Decke strahlt, während mittels der Kamera(s) markante Objektmerkmale im dreidimensionalen Raum erfasst werden. Wenn die Kamera beispielsweise Richtung Boden ausgerichtet ist, können dort typischerweise viele Features erfasst werden (z.B. Möbel, Teppich, Pflanzen etc.). Die unterschiedliche Ausrichtung des Lasers und der Kamera(s) ermöglicht die vielfältige Einsetzbarkeit des Messgeräts, weil die Lokalisierung des Messgeräts nicht von der Strukturbeschaffenheit der unmittelbaren Umgebung des einzumessenden Punktes abhängig ist.

Ein erfindungsgemäßes Messsystem umfasst ein oben angegebenes Messgerät, wobei zwischen dem Messgerät und einem Server eine kabellose Datenübertragung eingerichtet ist und wobei der Server einen Prozessor zur Auswertung der vom Messgerät erfassten Daten umfasst. Das Messgerät selbst erfasst die notwendigen Daten und sendet diese an den Server, wo eine entsprechende Auswertung erfolgt. Gegebenenfalls wird die kabellose Datenübertragung auch zur Rückmeldung eines Messergebnisses an das Messgerät genutzt.

Eine besonders vorteilhafte Verwendung des Messgeräts sieht vor, dass der eingemessene Punkt die Lage eines Sensors, eines Aktors, einer Bedieneinheit oder einer anderen technischen Einheit in einem Gebäude bestimmt. Auf diese Weise sind nachträgliche Gebäudeinstallationen auch im dreidimensionalen Modell dokumentierbar.

Die Erfindung wird nachfolgend in beispielhafter Weise unter Bezugnahme auf die beigefügten Figuren erläutert. Es zeigen in schematischer Darstellung:
- Fig. 1: Messsystem mit einem Messgerät, welches eine eigene Kamera zur Abbildung des einzumessenden Punktes umfasst
- Fig. 2: Messsystem mit einem Messgerät, welches ein Kamera eines Multi-Kamerakopfes zur Abbildung des einzumessenden Punktes nutzt
- Fig. 3: Messgerät mit einem Winkel α zwischen einer Kameraachse und einer Strahlachse des Laserentfernungsmessers

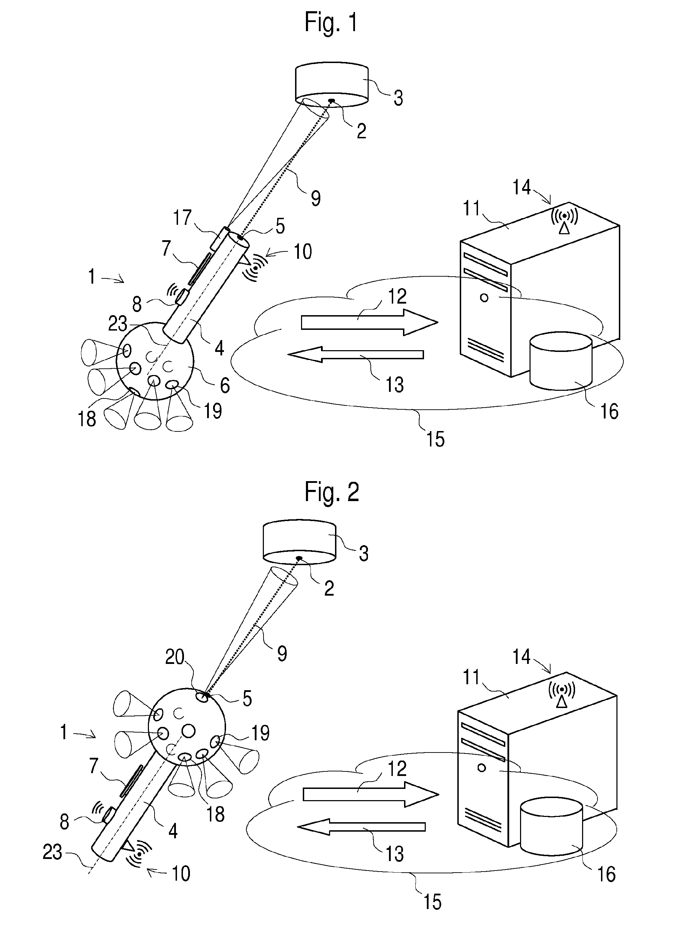

Fig. 1 zeigt ein als Handgerät ausgebildetes Messgerät 1 innerhalb eines Gebäudes. Der einzumessende Punkt 2 ist beispielsweise ein Oberflächenpunkt eines Sensors 3 (z.B. Rauchmelder). Das Messgerät 1 besteht aus einem zylinderförmigen Griff 4, an dessen einem Ende ein Laserentfernungsmesser 5 und an dessen anderem Ende ein Kamerakopf 6 angeordnet sind. Im vorliegenden Beispiel ist der Kamerakopf 6 fix mit dem Laserentfernungsmesser 5 verbunden, sodass eine vorgegebene Relativgeometrie gegeben ist. Konkret ist in Fig. 1 die Relativgeometrie durch eine starre Achse in der Funktion des Gerätegriffs 4 bestimmt. Voraussetzung ist jedenfalls, dass die Relativgeometrie zwischen Laserentfernungsmesser 5 und Kamerakopf 6 bekannt ist. Ist die Relativgeometrie z.B. mittels einer Schwenkvorrichtung variabel gestaltet, so wird die zum Zeitpunkt der Messung vorliegende Geometrie an die Auswerteeinrichtung übermittelt.

Zur Bedienung umfasst das Messgerät 1 ein Auslöseelement 7 und ein Ausgabeelement 8, beispielsweise einen Pieper. Durch ein Drücken des Auslöseelements 7 wird ein sich entlang der Strahlenachse 9 ausbreitender Laserstrahl ausgelöst. Sobald das Auslöseelement 7 wieder losgelassen wird, startet der Datenabgleich mit den Daten des dreidimensionalen Modells. Dabei wird die Lage des Kamerakopfes 6 in Bezug auf das dreidimensionale Objekt ermittelt. Mit der gemessenen Entfernung und der bekannte Relativgeometrie zwischen Laserentfernungsmesser und Kamerakopf 6 ergibt sich daraus die Lage des einzumessenen Punktes 2 in Bezug auf das dreidimensionale Objekt. Alternativ dazu kann die Entfernungsmessung des einzumessenden Punktes 2 unmittelbar in Bezug auf die Lage des Kamerakopfes 6 erfolgen.

Im Messgerät 1 ist zudem eine Sender/Empfänger-Einheit 10 angeordnet, um Daten mit einem Server 11 auszutauschen. Dieser dient vorteilhafterweise als Auswerteeinrichtung. Eine kabellose Datenübertragung 12, 13 ist in Fig. 1 mittels zweier Pfeile angedeutet. Auch der Server 11 umfasst eine entsprechende Sender/Empfänger-Einheit 14 und ist günstigerweise ein Element einer Cloud 15, in der Services zentral verfügbar sind. Auf diese Weise besteht eine besonders einfache Möglichkeit zum Datenaustausch via WLAN oder Bluetooth. Eine Speicherung der Daten des dreidimensionalen Modells und der erfassten Messdaten erfolgt günstigerweise mittels einer Datenbank 16.

Zur Dokumentation eines Messvorgangs umfasst das Messgerät 1 in Fig. 1 eine zusätzliche Kamera 17, die auf den einzumessenden Punkt 2 ausgerichtet ist.

Während des Einmessens projiziert der Laserentfernungsmesser 5 einen mit freiem Auge sichtbaren Lichtpunkt, wodurch ein präzises Anvisieren des einzumessenden Punktes 2 möglich ist. Der Kamerakopf 6 umfasst in Fig. 1 mehrere Kameras 18, 19. Ein erfindungsgemäßes Verfahren ist jedoch auch mit nur einer Kamera 18 durchführbar.

Mehrere Kameras 18, 19 sind vorteilhafterweise so angeordnet, dass sich die aufgenommen Bilder überlappen. Solcherart können mehrere Bilder anhand übereinstimmender Objektmerkmale abgeglichen werden, um ein robusteres Ergebnis zu erzielen (z.B. mittels Bundle Adjustment). Dabei ist es günstig, wenn die Kameras 18, 19 zur Objekterfassung nicht auf den einzumessenden Punkt 2 gerichtet sind. Infolge der starren und bekannten Geometrie zwischen Laserentfernungsmesser 5 und der jeweiligen Kamera 18, 19 sind auf diese Weise auch homogene und informationsarme Regionen oder Objektbereiche in dem dreidimensionalen Modell zuordenbar.

Als Multi-Kamerakopf 6 dient beispielsweise eine "Panoramic Ball Camera". Damit ist das Messgerät 1 samt Kalibrierung in einfacher Weise herstellbar.

Das bereits vorhandene dreidimensionale Modell bildet die Raumgeometrie des Objektes ab, in den der Punkt 2 eingemessen werden soll. Die entsprechenden Daten sind günstigerweise im Datenspeicher 16 der Cloud abgespeichert.

Durch den erfindungsgemäßen Abgleich einer Bildaufnahme oder mehrerer Bildaufnahmen mit dem dreidimensionalen Modell wird die exakte Position und Blickrichtung der jeweiligen Kamera 18, 19 in Bezug auf das Objekt bestimmt.

Ein geeignetes Verfahren zur Erstellung des dreidimensionalen Modells ist "Structure from Motion" (SfM). Hier wird das Modell beispielsweise offline aus einer Vielzahl von überlappenden Einzelbildern generiert. Auch online-fähige Versionen von SfM sind bekannt, bei denen das Modell inkrementell schon während der Bilddatenaufnahmen entsteht.

Das dreidimensionale Modell muss nicht "dicht" sein im Sinne einer ansehnlichen Visualisierung. Es reicht aus, wenn eine hinreichende Anzahl an wiederauffindbaren bildinhaltlichen Merkmalen enthalten ist.

Aus der eindeutigen Lokalisierung der jeweiligen Kamera 18, 19 bzw. des Kamerakopfes 6 bezüglich des dreidimensionalen Modells ergibt sich, dass über die bekannte Relativgeometrie auch die Lage des Messstrahles des Laserentfernungsmessers 5 im Raum eindeutig bestimmt ist. Daraus folgt über die gemessene Entfernung zum einzumessenden Punkt 2 auch die eindeutige Bestimmung der Lage dieses Punktes 2 im Raum.

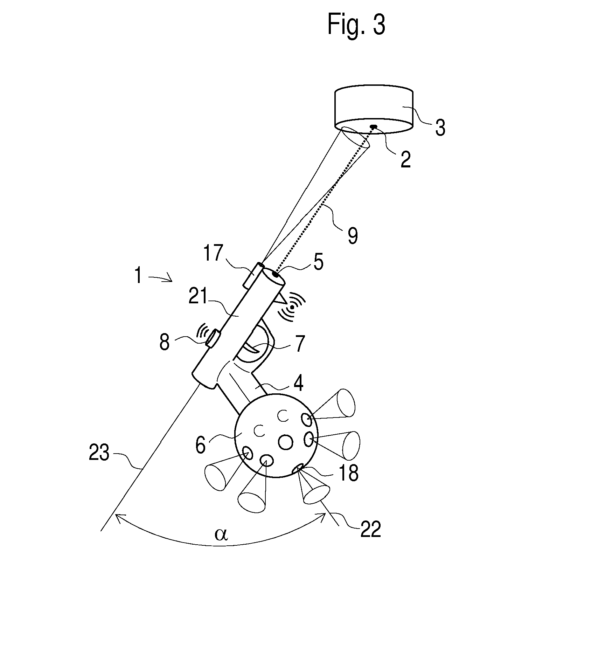

Ein in Fig. 2 abgebildetes Messgerät 1 umfasst einen Multi-Kamerakopf 6 mit mehreren integrierten Kameras 18, 19, 20, wobei eine Kamera 20 in Richtung des einzumessenden Punktes 2 ausgerichtet ist. Diese Kamera 20 dient ebenso wie die zusätzliche Kamera 17 in Fig. 1 und 3 zur optischen Kontrolle, um nachträglich feststellen zu können, auf welchen Punkt der Laserstrahl 9 gerichtet war. Damit wird die Entfernungsmessung mittels des Lasterstrahls 9 dokumentiert. Natürlich können in den Lokalisierungsprozess auch von dieser Kamera 20, 17 aufgezeichnete Objektmerkmale einfließen, sofern solche vorhanden und im Modell der dreidimensionalen Umgebung erfasst sind.

In Fig. 3 ist eine weitere Ausführungsform des Messgeräts 1 dargestellt. Hier ist ein Griff 4 über ein Verbindungselement 21 mit dem Laserentfernungsmesser 5 verbunden. Der Kamerakopf 6 ist am Ende des Griffs 4 angeordnet, sodass die Verdeckung durch den Unterarm eines Benutzers während einer Anvisierung des einzumessenden Punktes minimiert wird. Die Relativgeometrie zwischen Kamera 18 bzw. Kamerakopf 6 und Laserentfernungsmesser 5 ist hier nicht mehr kollinear, sondern durch einen fixen Winkel a zwischen der Kamera- bzw. Kamerakopfachse 22 und der Strahlenachse 23 des Laserstrahls 9 bestimmt.

Optional erfolgt mittels einer zusätzlichen Kamera 17 die Dokumentation der Entfernungsmessung. Gestartet wird ein Messvorgang mit einem Auslöseelement 7 in Form eines Abzugs.

Eine typische Messaufgabe ist das Einmessen von Sensoren (z.B. Brandmelder) oder anderen technischen Einheiten an einer Decke eines Gebäudes. Die Deckenstruktur ist in der Regel repetitiv bzw. merkmalsarm. Aus Bildern der Decke ist die Lokalisierung in Bezug zum dreidimensionalen Modell schwierig, sofern die Decke überhaupt im Modell erfasst wurde. Dagegen sind tiefer liegende Objektbereiche (Wände und Objektdetails im Raum) in der Regel informationsreicher. Konkret wird der Laserentfernungsmesser 5 auf einen zentralen Punkt (entspricht dem einzumessenden Punkt 2) der einzumessenden Einheit gerichtet, wobei die jeweilige Kamera 18, 19 bzw. der Kamerakopf 6 die Umgebung mit einem nach unten bzw. zur Seite gerichteten Blickwinkel erfasst.

Die in Richtung des einzumessenden Punktes 2 ausgerichtete Kamera 17, 20 wird günstigerweise zur Erkennung der einzumessenden Einheit genutzt. Das kann automatisiert durch Auswertung des Bildmaterials geschehen (z.B. Bestimmung eines Brandmeldertyps, Ablesen von Beschriftungen etc.).

Für eine vollständige Dokumentation des Messvorgangs wird das Bildmaterial der Kamera 17, 20 mit einem Zeitstempel versehen.

## Patentansprüche

1. Verfahren zum Einmessen eines Punktes (2) in einem dreidimensionalen Objekt, insbesondere einem Gebäude, mittels eines dreidimensionalen Modells der Raumgeometrie des dreidimensionalen Objektes, **dadurch gekennzeichnet, dass** folgende Verfahrensschritte durchgeführt werden:
- Ausrichten eines Laserentfernungsmessers (5) auf den einzumessenden Punkt (2), um die Entfernung zum Punkt (2) zu messen,
- Aufnehmen eines Bildes mittels einer Kamera (18), deren Aufnahmeachse (22) in einer vorgegebenen Relativgeometrie zur Strahlenachse (23) des Laserentfernungsmessers (5) ausgerichtet ist,
- Lokalisierung der Kamera (18) im dreidimensionalen Objekt mittels einer Auswerteeinrichtung, welche die Daten des aufgenommenen Bildes mit den Daten des dreidimensionalen Modells abgleicht,
- Ermitteln der Lage des einzumessenden Punktes (2) anhand der gemessenen Entfernung, der lokalisierten Position der Kamera (18) und der Relativgeometrie zwischen Aufnahmeachse (22) und Strahlenachse (23).

2. Verfahren nach Anspruch 1, **dadurch gekennzeichnet, dass** die Daten des dreidimensionalen Modells in einer zentralen Datenbank (16) gespeichert werden.

3. Verfahren nach Anspruch 1 oder 2, **dadurch gekennzeichnet, dass** das aufgenommene Bild und die gemessene Entfernung zum einzumessenden Punkt (2) an einen Server (11) übertragen werden und dass der Server (11) die Daten des aufgenommenen Bildes mit den Daten des dreidimensionalen Modells abgleicht.

4. Verfahren nach Anspruch 3, **dadurch gekennzeichnet, dass** der Server (11) ein Ergebnis der Lokalisierung zurücksendet.

5. Messgerät zur Durchführung eines Verfahrens nach einem der Ansprüche 1 bis 4, **dadurch gekennzeichnet, dass** das Messgerät (1) die Kamera (18) und den Laserentfernungsmesser (5), welche vorzugsweise untereinander in einer fixen Anordnung verbunden sind, umfasst.

6. Messgerät nach Anspruch 5, **dadurch gekennzeichnet, dass** das Messgerät (1) zumindest eine weitere Kamera (19) zum Aufnehmen eines weiteren Bildes des dreidimensionalen Objektes umfasst.

7. Messgerät nach Anspruch 6, **dadurch gekennzeichnet, dass** die Kameras (18, 19) in einem Multi-Kamerakopf (6) integriert sind.

8. Messgerät nach einem der Ansprüche 5 bis 7, **dadurch gekennzeichnet, dass** das Messgerät (1) als Handgerät ausgebildet ist.

9. Messgerät nach einem der Ansprüche 5 bis 8, **dadurch gekennzeichnet, dass** das Messgerät (1) ein Auslöseelement (7) zum Starten des Messvorgangs umfasst.

10. Messgerät nach einem der Ansprüche 5 bis 9, **dadurch gekennzeichnet, dass** das Messgerät (1) ein Ausgabeelement (8) zur Meldung eines durchgeführten Messvorgangs umfasst.

11. Messgerät nach einem der Ansprüche 5 bis 10, **dadurch gekennzeichnet, dass** das Messgerät (1) eine Zusatzkamera (17) umfasst, deren Aufnahmeachse in Richtung des Lasermessstrahls (9) ausgerichtet ist.

12. Messgerät nach einem der Ansprüche 7 bis 10, **dadurch gekennzeichnet, dass** die Aufnahmeachse einer Kamera (20) des Multi-Kamerakopfes (6) in Richtung des Lasermessstrahls (9) ausgerichtet ist.

13. Messgerät nach einem der Ansprüche 5 bis 12, **dadurch gekennzeichnet, dass** die Lage einer Achse (22) der Kamera (18) oder des Multi-Kamerakopfes (6) und die Lage der Strahlenachse (23) des Laserentfernungsmessers (5) zueinander durch einen vorgegebenen Winkel (α) bestimmt sind.

14. Messsystem zum Einmessen eines Punktes (2) in einem dreidimensionalen Objekt, insbesondere einem Gebäude, **dadurch gekennzeichnet, dass** das Messsystem ein Messgerät (1) nach einem der Ansprüche 5 bis 13 umfasst, dass zwischen dem Messgerät (1) und einem Server (11) eine kabellose Datenübertragung eingerichtet ist und dass der Server (11) einen Prozessor zur Auswertung der vom Messgerät (1) erfassten Daten umfasst.

15. Verwendung eines Messgeräts (1) nach einem der Ansprüche 5 bis 13, **dadurch gekennzeichnet, dass** der einzumessende Punkt (2) die Lage eines Sensors, eines Aktors, einer Bedieneinheit oder einer anderen technischen Einheit in einem Gebäude bestimmt.
